# EUROPÄISCHE PATENTANMELDUNG

(11) **EP 2 338 633 A1**
(43) Veröffentlichungstag der Anmeldung: **29.06.2011**
(21) Anmeldenummer: 09015881.7
(22) Anmeldetag: 22.12.2009
(51) Int. Cl.: B23K 20/12

(54) **Reibschweissverfahren und Rührreibpunktschweissgerät mit einer Erhöhung der Kraft am Ende des Schweissens**

(71) Anmelder: Harms & Wende GmbH & Co. KG, 21079 Hamburg (DE)
(72) Erfinder: Webb, Alexander, 21077 Hamburg (DE); Luidhardt, Fritz, 20355 Hamburg (DE)
(74) Vertreter: Glawe, Delfs, Moll

(57) **Zusammenfassung**

Eine Ausführungsform des Rührreibpunktschweißgeräts mit einer Welle (1), einem Antrieb für die Welle (1) und einem an der Welle (1) angeordneten, durch die Welle (1) drehend antreibbaren und in Richtung auf das Werkstück mit einer Kraft beaufschlagbaren Werkzeug (2) mit einer im Wesentlichen rotationssymmetrischen Werkzeugspitze (4), zeichnet sich dadurch aus, dass das Verhältnis V/D von Gesamtvolumen V des Werkzeugs (2), gemessen in mm³, und Durchmesser D der Werkzeugspitze (4), gemessen in mm, kleiner ist als 50, insbesondere kleiner ist als 20, und dass das Werkzeug (2) mit einer Wärmeisolierung gegen die Welle (1) und übrige Teile des Gerätes versehen ist.

## Beschreibung

Die Erfindung betrifft ein Reibschweißverfahren, bei dem ein an einem Bauteil zu befestigendes Werkstück unter Drehung gegen das Bauteil gedrückt wird, wobei Werkstück und Bauteil an der Berührungsstelle teilweise aufschmelzen oder plastifiziert werden, so dass nach Erkalten eine feste Verbindung erhalten wird. Die Erfindung betrifft weiter ein Rührreibpunktschweißgerät mit einer Welle, einem Antrieb für die Welle und einem an der Welle angeordneten, durch die Welle drehend antreibbaren und in Richtung auf das Werkstück mit einer Kraft beaufschlagbaren Werkzeug mit einer konzentrischen, in erster Näherung punkt- und rotationssymmetrischen Werkzeugspitze.

Beim Rührreibpunktschweißen (WO 01/36144 A1) wird das zu schweißende Werkzeug dadurch erwärmt und teilweise plastifiziert oder aufgeschmolzen, indem die Werkzeugspitze eines Reibpunktschweißgeräts mit einer gewissen Kraft gegen das Werkstück gedrückt und in Drehung versetzt wird. Die Plastifizierung oder das Aufschmelzen erfolgt dann durch die Reibungswärme. Dabei dringt ein Stift unter Drehung in zwei zumindest teilweise überlappende Bleche bis in das unterste dieser Bleche ein, plastifiziert und durchmischt das Material, wodurch die Schweißstelle entsteht.

Bei konventionellen Rührreibpunktschweißgeräten sind einerseits große Kräfte erforderlich, mit denen das Werkzeug beaufschlagt werden muss. Andererseits sind hohe Antriebsleistungen erforderlich, um das gegen das Werkstück gedrückte Werkzeug in Drehung zu versetzen. Dies bereitet bei entsprechend dimensionierten z.B. in Fertigungsstraßen angeordneten Rührreibpunktschweißgeräten keine besonderen Schwierigkeiten.

Rührreibpunktschweißgeräte können aber nicht nur in großen Fertigungseinheiten an z.B. Automobilkarosserien verwendet werden, sondern sind auch als kleinere Einheiten, insbesondere auch für Reparaturzwecke geeignet. In diesem Falle ist das Reibpunktschweißgerät nicht an irgendwelchen Gestellen oder Führungen gehalten, sondern soll z.B. von Hand gehalten werden. Dies erfordert eine verhältnismäßig geringe Masse, die 20 kg nicht überschreiten darf, wenn das Gerät getragen und gehandhabt werden soll.

Wegen der geringen zulässigen Masse ist natürlich einerseits die Antriebsleistung begrenzt und andererseits auch der Anpressdruck begrenzt. Ist der Anpressdruck nämlich zu groß, so reicht die mit einem Gerät dieser Größe erreichbare Antriebsleistung nicht aus, um das Werkzeug in geeignete Drehung zu versetzen, und die erforderliche Festigkeit der Zange benötigt zuviel Konstruktionsmasse.

Ähnliche Probleme treten beim Reibschweißen auf. Dabei wird ein Werkstück drehend gegen ein Bauteil gedrückt, an dem es angeschweißt werden soll. Aufgrund der Reibungswärme schmilzt an der Berührungsstelle das Material von Bauteil und/oder Werkstück teilweise auf oder wird plastifiziert. Nach dem Erkalten wird so eine feste Schweißstelle erhalten. Wie bei den erwähnten Rührreibpunktschweißgeräten sind beträchtliche Antriebsleistungen, insbesondere Anpresskraft, erforderlich, um eine feste Schweißstelle zu erhalten, was entsprechend große Vorrichtungen erfordert, die nicht mehr von Hand gehalten werden können.

Für das Reibschweißen wird, genauso wie für das Reibpunktschweißen, ein minimiertes Verhältnis von installierter Antriebsleistung bzw. Schließkraftvermögen zu der zu erzielenden Reibpunkt-Größe und -verbindungsfestigkeit angestrebt (minimierte Maschinengröße, minimierte Maschinenkosten).

Die Aufgabe der Erfindung besteht in Erschaffung eines Verfahrens und eines Rührreibpunktschweißgeräts bzw. Reibschweißgerätes der eingangs genannten Art, mit denen auch mit geringerer Antriebsleistung für den Drehantrieb und geringerer statischer Anpresskraft hochwertigen Reibpunktschweißverbindungen erhalten werden können.

Eine Lösung dieser Aufgabe besteht in einem Verfahren, bei dem die Kraft, mit dem Werkstück und Bauteil zusammengedrückt werden, am Ende des Schweißvorgangs stoßartig und kurzzeitig erhöht wird.

Eine andere erfindungsgemäße Lösung der Aufgabe besteht aus einem Rührreibpunktschweißgerät bzw. Reibschweißgerät , das mit Einrichtungen zur stoßartigen und kurzzeitigen Erhöhung der Kraft versehen ist, mit der Werkzeug und Werkstück zusammengedrückt werden.

Die Erfindung hat erkannt, dass die Qualität der Schweißstelle durch Erhöhung der Kraft, mit der Werkstück und Bauteil beziehungsweise Werkzeug und Werkstück zusammengedrückt werden, verbessert werden kann. Die Verbindungsfestigkeit wird dabei durch Maximierung der innerkristallinen sowie zwischenkristallinen Bindungen im Werkstück erreicht, mikroskopische Lücken wie Hohlräume, Risse oder um Oxideinschlüsse werden minimiert. Die Kraft braucht aber nur kurzzeitig ausgeübt zu werden, was vielfältige Vorteile hat.

Eine weitere erfindungsgemäße Lösung der Aufgabe besteht aus einem Rührreibpunktschweißgerät, bei dem das Verhältnis V/D von Gesamtvolumen V des Werkzeugs, gemessen in mm³, und Außendurchmesser D des Werkzeugs, gemessen in mm, kleiner ist als 50, insbesondere kleiner ist als 20, und insbesondere das Werkzeug mit einer Wärmeisolierung gegen die Welle und übrige Teile des Gerätes versehen ist.

Besonders vorteilhaft ist es wenn solches Werkzeug hohl ausgeführt ist oder innen ein Material von geringerer Wärmeleitfähigkeit als die der Werkzeug-Außenpartien enthält.

Die Erfindung geht dabei von der Erkenntnis aus, dass in Folge der begrenzten Antriebsleistung nur verhältnismäßig wenig Wärmeenergie durch Reibung erzeugt wird. Durch das besondere Verhältnis von Gesamtvolumen des Werkzeugs zum Durchmesser der Werkzeugspitze hat aber der Teil des Reibpunktschweißgeräts, der mit dem Werkstück in Berührung kommt, ein begrenztes Volumen, also auch begrenzte Masse, und heizt sich dadurch verhältnismäßig stark auf. Durch Wärmeisolierung und minimierte Kontaktflächen gegen die Welle und übrige Teile des Gerätes wird dabei vermieden, dass diese Wärme schnell abgeführt wird. Die Werkzeugspitze wird dann beim Schweißvorgang sehr schnell heiß und bleibt auch bei Aneinanderreihung von Schweißpunkten heiß, so dass trotz der geringen Größe und verhältnismäßig geringen Antriebskraft des Geräts Reibpunktschweißstellen hoher Qualität hergestellt werden können.

Bei einer weiteren erfindungsgemäßen Lösung sind beim Rührreibpunktschweißgerät die beiden vorgenannten Maßnahmen kombiniert. Einerseits sind Einrichtungen zur kurzzeitigen Erhöhung der Kraft vorgesehen, andererseits ist das Verhältnis von Gesamtvolumen V des Werkzeugs und Außendurchmesser D der Werkzeugspitze verhältnismäßig klein. Es wird also die für die Erhöhung der Qualität der Schweißstelle große Kraft aufgebracht und gleichzeitig auch eine entsprechend hohe Temperatur erreicht.

Man könnte daran denken, das Rührreibpunktschweißgerät gegen Blech oder ein sonstiges Werkstück zu drücken, das auf eine Unterlage fixiert ist. Die stoßartige und kurzzeitige Erhöhung der Kraft würde aber einen Rückstoß ausüben, der von der Bedienungsperson aufgenommen werden muss.

Außerdem ist solches Vorgehen an vielen Werkstücken räumlich nicht möglich oder würde zu aufwändige Vorrichtungen und Fertigungsabläufe erfordern (so z.B. an Karosserien).

Die Erfindung ist besonders vorteilhaft bei einem zangenartigen Rührreibpunktschweißgerät mit einer C-förmigen Ausnehmung zum Umgreifen des Werkstücks anzuwenden, das einen Gegenhalter aufweist, der mit Einrichtungen zum Ausüben einer Gegenkraft versehen ist, deren zeitlicher Verlauf und Größe der kurzzeitig erhöhten Kraft entspricht. Es wird so auf das Werkstück von beiden.Seiten die gleiche Kraft stoßartig ausgeübt, so dass der Nettorückstoß des Rührreibpunktschweißgeräts gering, theoretisch sogar 0 ist. Dies erleichtert selbstverständlich die Bedienung.

Während der Ausübung der erhöhten stoßartigen Kraft sollte sich das Werkzeug nicht mehr drehen oder bereits in der Abbremsphase sein. Zu diesem Zweck könnte man den Antrieb für die Welle kurz vor Ausüben der stoßartigen Kraft ausschalten und Welle und Werkzeug dann durch die Reibung abbremsen, die während der erhöhten Kraft auftritt. Bei einer vorteilhaften Ausführungsform sind aber Einrichtungen zur schlagartigen Beendigung der Drehbewegung der Welle vorgesehen. D.h., die Welle und/oder deren Antriebs-Motor wird abgebremst, bevor die erhöhte Kraft aufgewendet wird.

Bei einer vorteilhaften Ausführungsform weist das Rührreibpunktschweißgerät bzw. Reibschweißgerät zu beschleunigende Massen zum Ausüben der kurzzeitig erhöhten Kraft auf. Diese wirken in ähnlicher Weise wie ein Hammerschlag. Dabei können insbesondere spannbare mechanische oder Gasdruck-Federelemente zum Ausüben der kurzzeitig erhöhten Kraft vorgesehen sein.

Durch entsprechende Maßnahmen, gegebenenfalls zeitliche Steuerung, kann erreicht werden, dass entweder das Werkzeug beschleunigt wird und den Druck auf das Werkstück erhöht oder aber das Werkstück beschleunigt wird, indem der Gegenhalter die stoßartige Kraft ausübt, oder indem Werkzeug und Werkstück gegeneinander beschleunigt werden, indem Werkzeug und Gegenhalter gleichzeitig beschleunigt werden.

Die oben beschriebenen Einzelheiten des Rührreibpunktschweißgeräts, mit denen die impulsartige höhere Kraft erzeugt wird, können entsprechend auch bei dem Reibschweißgerät verwendet werden.

Auf jeden Fall wird die hohe statische Zangenschließkraft durch eine kurzzeitig impulsartig erhöhte Kraft erhöht, oder sie wird durch Letztere ersetzt, um dadurch die Qualität der Schweißstelle zu verbessern.

Die Qualität der Schweißverbindung kann weiter erhöht werden, bzw. die aufzuwendende Antriebsleistung bzw. statische Andruckkraft kann erniedrigt werden, wenn das Rührreibpunktschweißgerät mit Einrichtungen zur Erwärmung des Werkstücks versehen ist. Es wird also dann nicht nur die Reibungswärme verwendet, sondern auch eine externe Erwärmung des Werkstücks. Auch eine Erwärmung mittels Stromfluss durch das Werkzeug oder durch dessen induktive Erwärmung mit Wirbelströmen oder mittels Laserenergie oder mittels zusätzlich am Werkstück erzeugter Reibungswärme ist möglich.

Vorteilhafterweise besteht beim Rührreibpunktschweißgerät der Erfindung das Werkzeug aus einem temperaturbeständigen Hartmetall mit geringer Wärmeleitfähigkeit, insbesondere geringerer Wärmeleitfähigkeit als Stahl. Damit kann dann nicht nur z.B. Aluminium verschweißt werden, sondern auch Stahl, was Temperaturen von über 900 °C erfordert. Auch andere Hartstoffe, insbesondere Keramiken, können vorteilhafterweise für das Werkzeug verwendet werden.

Um eine übermäßige Abkühlung zu vermeiden, wird vorteilhafterweise vorgesehen, dass zumindest die mit dem Werkstück in Berührung kommenden Teile des Gegenhalters aus einem Material mit geringer, insbesondere geringerer Wärmeleitfähigkeit als Stahl bestehen.

Zur Verbesserung der FSSW- Punktqualität kann das Reibpunktschweißgerät mit Schutzgaseinrichtungen versehen sein.

Es besteht bei gewissen Rührreibpunktschweißgeräten, bei denen das rotierende Werkzeug von einer Hülse umgeben ist, die Gefahr, dass plastifizierter Werkstoff des Werkstücks in den Spalt zwischen Stift und Hülse eindringt und dort erhärtet. Dies kann durch Kühlung auf einen sehr kleinen Bereich am werkstückseitigen Ende des Werkzeugs begrenzt werden, wenn das Gerät gekühlt ist, insbesondere das drehende Werkzeug und/oder die stehende Hülse flüssigkeitsgekühlt sind.

Die Lebensdauer der FSSW- Werkzeuge, die anwendungsgemäß Reibverschleiß erfahren, nimmt i.A. mit zunehmender Temperatur ab. Es kann sein dass eine hinreichende Lebensdauer des Werkzeuges, abhängig vom Material der Werkstücke und den Erfordernissen des Fertigungs- bzw. Reparaturprozesses (z.B. sehr hohe Taktrate oder automatisierter Nachtschichtbetrieb ohne Anwesenheit von Personal) nicht erreicht wird. In solchen Fällen kann ein geeignet dafür gestaltetes FSSW-Werkzeug mittels Flüssigkeit von innen und/oder außen gekühlt werden (sofern dabei die Qualität der FSSW- Punkte akzeptabel bleibt).

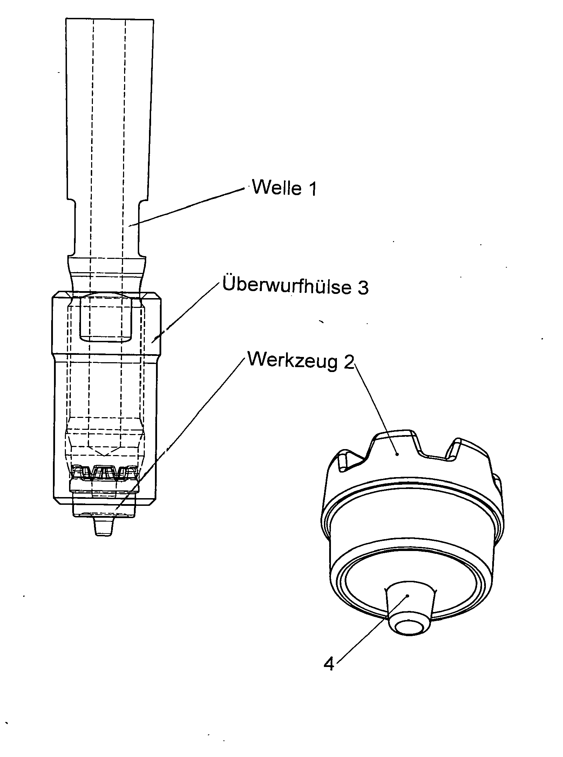

Eine Ausführungsform des erfindungsgemäßen Rührreibpunktschweißgeräts ist in der Figur gezeigt, die das werkstückseitige Ende eines Rührreibpunktschweißgeräts und daneben im vergrößerten Maßstab das eigentliche Werkzeug zeigt.

Ein motorisch angetriebenes Wellenende 1 ist stirnseitig verzahnt. Ein Werkzeug 2 mit einer Werkzeugspitze 4, die in das Werkstück eindringen soll, befindet sich damit in formschlüssigem Eingriff und wird auch dadurch zentriert. Als Alternativen für den Drehmoment/übertragenden Anschluss sind dabei Sechskant, Vielkant, Poligonprofil, eine Spannzangenverbindung usw. möglich. Die Verbindung sollte aber nur einen geringen Wärmeübergang ermöglichen, damit das Werkzeug genügend erwärmt und warm gehalten wird.

Besonders vorteilhaft ist es wenn das Werkzeug innen hohl, maschinenseitig offen, ausgeführt ist und somit eine verringerte Wärmekapazität und verringerte Kontaktflächen zur Maschine aufweist.

Axial wird das Werkzeug durch die Überwurfhülse 3 in seiner Position gehalten. Auch hier sollte wieder ein möglichst geringer Wärmeübergang stattfinden. Vorteilhafterweise sind Werkzeug 2, insbesondere die Werkspitze 4, Welle 1 und Überwurfhülse 3 aus Material mit geringer Wärmeleitfähigkeit hergestellt, wobei das Werkzeug 2 selbst auch aus einem hochtemperaturbeständigen Hartmaterial bestehen muss.

## Patentansprüche

1. Reibschweißverfahren, bei dem ein an einem Bauteil zu befestigendes Werkstück unter Drehung gegen das Bauteil gedrückt wird, wobei Werkstück und Bauteil an der Berührungsstelle teilweise aufschmelzen oder plastifiziert werden, so dass nach Erkalten eine feste Verbindung erhalten wird, **dadurch gekennzeichnet, dass** die Kraft, mit dem Werkstück und Bauteil zusammengedrückt werden, am Ende des Schweißvorgangs stoßartig und kurzzeitig erhöht wird.

2. Rührreibpunktschweißgerät mit einer Welle (1), einem Antrieb für die Welle (1) und einem an der Welle (1) angeordneten, durch die Welle (1) drehend antreibbaren und in Richtung auf das Werkstück mit einer Kraft beaufschlagbaren Werkzeug (2) mit einer im Wesentlichen rotationssymmetrischen Werkzeugspitze (4), **dadurch gekennzeichnet, dass** es mit Einrichtungen zur stoßartigen und kurzzeitigen Erhöhung der Kraft versehen ist.

3. Rührreibpunktschweißgerät mit einer Welle (1), einem Antrieb für die Welle (1) und einem an der Welle (1) angeordneten, durch die Welle (1) drehend antreibbaren und in Richtung auf das Werkstück mit einer Kraft beaufschlagbaren Werkzeug (2) mit einer im Wesentlichen rotationssymmetrischen Werkzeugspitze (4), **dadurch gekennzeichnet, dass** das Verhältnis V/D von Gesamtvolumen V des Werkzeugs (2), gemessen in mm³, und Außendurchmesser D des Werkzeugs (2), gemessen in mm, kleiner ist als 50, insbesondere kleiner ist als 20, und dass insbesondere das Werkzeug (2) mit einer Wärmeisolierung gegen die Welle (1) und übrige Teile des Gerätes versehen ist.

4. Rührreibpunktschweißgerät mit einer Welle (1), einem Antrieb für die Welle (1) und einem an der Welle (1) angeordneten, durch die Welle (1) drehend antreibbaren und in Richtung auf das Werkstück mit einer Kraft beaufschlagbaren Werkzeug (2) mit einer im Wesentlichen rotationssymmetrischen Werkzeugspitze (4), **dadurch gekennzeichnet, dass** es mit Einrichtungen zur kurzzeitigen Erhöhung der Kraft versehen ist, dass das Verhältnis V/D von Gesamtvolumen V des Werkzeugs (2), gemessen in mm³, und Außendurchmesser D des Werkzeugs (2), gemessen in mm, kleiner ist als 50, insbesondere kleiner ist als 20, und dass insbesondere das Werkzeug (2) mit einer Wärmeisolierung gegen die Welle (1) und übrige Teile des Gerätes versehen ist.

5. Rührreibpunktschweißgerät nach Anspruch 2 oder 4, **dadurch gekennzeichnet, dass** es zangenartig mit einer C-förmigen Ausnehmung zum Umgreifen des Werkstücks und einem Gegenhalter versehen ist, der mit Einrichtungen zum Ausüben einer Gegenkraft versehen ist, deren zeitlicher Verlauf und Größe der kurzzeitig erhöhten Kraft entspricht.

6. Rührreibpunktschweißgerät nach einem der Ansprüche 2 und 4 oder 5, **dadurch gekennzeichnet, dass** es mit Einrichtungen zur schlagartigen Beendigung der Drehbewegung der Welle (1) versehen ist.

7. Rührreibpunktschweißgerät nach einem der Ansprüche 2 und 4 bis 6, **dadurch gekennzeichnet, dass** es zu beschleunigende Massen zum Ausüben der kurzzeitig erhöhten Kraft aufweist.

8. Rührreibpunktschweißgerät nach einem der Ansprüche 2 und 4 bis 7, **dadurch gekennzeichnet, dass** es spannbare mechanische oder Gasdruck-Federelemente zum Ausüben der kurzzeitig erhöhten Kraft aufweist.

9. Rührreibpunktschweißgerät nach einem der Ansprüche 2 bis 8, **dadurch gekennzeichnet, dass** es mit Einrichtungen zur Erwärmung des Werkstücks versehen ist.

10. Rührreibpunktschweißgerät nach einem der Ansprüche 2 bis 9, **dadurch gekennzeichnet, dass** das Werkzeug (2) aus einem temperaturbeständigen Hartmetall oder Hartstoff, insbesondere Keramik, mit geringer Wärmeleitfähigkeit, insbesondere geringerer Wärmeleitfähigkeit als Stahl besteht.

11. Rührreibpunktschweißgerät nach einem der Ansprüche 5 bis 10, **dadurch gekennzeichnet, dass** zumindest die mit dem Werkstück in Berührung kommenden Teile des Gegenhalters aus einem Material mit geringer, insbesondere geringerer Wärmeleitfähigkeit als Stahl bestehen.

12. Rührreibpunktschweißgerät nach einem der Ansprüche 2 bis 11, **dadurch gekennzeichnet, dass** es mit Schutzgaseinrichtungen versehen ist.

13. Rührreibpunktschweißgerät nach einem der Ansprüche 1 bis 12, **dadurch gekennzeichnet, dass** es mit Kühleinrichtungen insbesondere für Flüssigkeitskühlung versehen ist.
